Europäisches Patentamt

European Patent Office

Office européen des brevets

(19)

(11) Veröffentlichungsnummer: **0 240 707**
**B1**

(12) **EUROPÄISCHE PATENTSCHRIFT**

(45) Veröffentlichungstag der Patentschrift:
12.09.90

(51) Int. Cl.⁵: **G01D 5/16**

(21) Anmeldenummer: 87102905.4

(22) Anmeldetag: 02.03.87

(54) Vorrichtung zur berührungslosen Positionsmessung.

(30) Priorität: 05.04.86 DE 3611469

(43) Veröffentlichungstag der Anmeldung:
14.10.87 Patentblatt 87/42

(45) Bekanntmachung des Hinweises auf die Patenterteilung:
12.09.90 Patentblatt 90/37

(84) Benannte Vertragsstaaten:
CH DE FR GB IT LI

(56) Entgegenhaltungen:
DE-A- 3 244 891

(73) Patentinhaber: ROBERT BOSCH GMBH, Postfach 50,
D-7000 Stuttgart 1(DE)

(72) Erfinder: Aschenbrenner, Johannes, Gerwigplatz 5,
D-7800 Freiburg(DE)
Erfinder: Gerlach, Günter, Fliederweg 8,
D-7550 Rastatt(DE)
Erfinder: Gölzer, Thomas, Dr. Dipl.-Phys.,
Gartenstrasse 20, D-7141 Schwieberdingen(DE)
Erfinder: Möllendorf, Manfred, Dr. Dipl.-Phys.,
Hoffmannstrasse 94, D-7250 Leonberg(DE)
Erfinder: Zabler, Erich, Dr. Dipl.-Ing., Brunhildstrasse 11,
D-7513 Stutensee(DE)

## Beschreibung

Stand der Technik

Die Erfindung geht aus von einer gattungsgemäßen Vorrichtung zur berührungslosen Positionsmessung und einem Auswerteverfahren für die Sensorsignale. Aus der DE-PS 32 44 891 ist ein derartiges Positionsmeßgerät bekannt. An einem bewegbaren oder ruhenden, der Positionsbestimmung unterworfenen Teil ist in einem elektromagnetischen Wechselfeld ein einen Verbraucher darstellendes oder Feldlinien aussendendes Element als Positionsindikator vorgesehen. Diesem Element ist ein Sensorenträger räumlich benachbart zugeordnet, der eine Mehrzahl elektrisch voneinander getrennter Einzelsensoren aufweist, wobei jeder dieser Einzelsensoren an Gleich- oder Wechselspannung legbar ist. Es ist eine Abfrage- und Auswerteeinrichtung vorgesehen, mit der jeder der Einzelsensoren zwecks Feststellung seines von der Position des ortsveränderlichen oder ruhenden Positionsindikators abhängigen Ausgangssignal über eine Multiplexeinrichtung verbindbar ist. Mit Hilfe einer geeigneten elektronischen Auswerteeinrichtung, beispielsweise einem Mikroprozessorsystem, wird für die Positionsbestimmung des Positionsindikators die phänomenologische Charakteristik wie Maximum, Minimum oder Nulldurchgang der zu einem Kurvenzug verbundenen Werte der Sensoren herangezogen.

In der Firmenschrift "POMUX, Produktinformation", Angewandte Digital Elektronik GmbH, Bundesstraße 25, 2051 Brunstorf, ist ein elektronisches Gerät zur berührungslosen Positionsmessung beschrieben. Als Positionsindikator ist ein Permanentmagnetplättchen vorgesehen, das am bewegten, der Positionsbestimmung unterworfenen Teil, angebracht ist. Die Verbindungslinie, Nord-Südpol, des Magneten liegt zur Meßrichtung parallel. Die Sensorelektronik enthält die Sensorstrecke und die Multiplex-Logik. Die Sensorstrecke besteht aus einer vorgegebenen geometrischen Anordnung magnetisch empfindlicher Sensoren. Es kommen magnetoresistive Einzelsensoren der Firma VALVO zur Anwendung. Diese Sensoren sind als einreihige Sensor-Kette vertikal ausgerichtet und sensitiv zur Meßstrecke plaziert. Bei einer derartigen Sensoranordnung zeigen die Ausgangssignale der Einzelsensoren in der näheren Umgebung des Magneten einen Extremwert, am Ort des Magneten einen Nulldurchgang und anschließend einen entgegengesetzten Extremwert. Zur Positionsbestimmung wird der Nulldurchgang ausgewertet, da hier die maximale Empfindlichkeit auftritt.

Ein Nachteil dieser Sensoranordnung ist es, daß ein Stör-Magnetfeld das Meßergebnis beeinflußt. Eine Kompensation ist bei der einreihigen Sensoranordnung nicht möglich. Stör-Magnetfelder treten jedoch häufig am Einsatzort eines Positionsmeßgerätes auf. Sie können nur als Gleichfeld und nur als Wechselfeld oder auch in Kombination vorliegen.

Der Abstand zwischen Positionsindikator und Sensoranordnung kann nicht gemessen werden. Eine Längenmessung ist ungenauer, wenn sich auf der zu messenden Wegstrecke der Abstand zwischen dem Positionsindikator und der Sensoranordnung ändert.

Die Erfindung ist im Patentanspruch 1 gekennzeichnet.

Die erfindungsgemäße Vorrichtung zur berührungslosen Positionsmessung hat den Vorteil, daß ein externes Stör-Magnetfeld durch Kompensation keinen Einfluß auf das Meßergebnis hat. Dies wird durch eine zweireihige Sensoranordnung erreicht, wobei das feldlinienaussendende Element in Bezug auf die Sensorreihen derart angeordnet ist, daß die Feldlinien auf die Ausgangssignale der Sensorelemente der ersten Reihe eine entgegengesetzte Wirkung aufweisen im Vergleich zu den Sensorelementen der zweiten Sensorreihe.

Vorteilhafte Weiterbildungen und Verbesserungen der erfindungsgmäßen Vorrichtung ergeben sich aus abhängigen Patentansprüchen.

Eine Erhöhung des Auflösungsvermögens der Vorrichtung zur berührungslosen Positionsmessung ergibt sich durch eine gegeneinander versetzte Anordnung der Einzelsensoren.

Besonders vorteilhaft ist die Verwendung von magnetoresistiven Elementen als Sensoren. Diese Elemente weisen eine hohe Empfindlichkeit auf und sind preisgünstig in der Herstellung.

Eine vorteilhafte Ausgestaltung der erfindungsgemäßen Vorrichtung zur berührungslosen Positionsmessung ist durch eine Zuordnung wenigstens eines Temperatursensors zu den Positionssensoren gegeben. Durch die Erfassung der Temperatur an der Sensoranordnung ist eine Temperaturabhängigkeit der Ausgangssignale der einzelnen Sensoren in einer Auswerteschaltung berücksichtigbar. Es ist somit möglich, eine Abstandsmessung zwischen dem feldlinienaussendenden Element und der Sensoranordnung durchzuführen. Besonders zweckmäßig hat es sich erwiesen, die gesamte Sensoranordnung – die Positionssensoren und den wenigstens einen Temperatursensor – auf einem gemeinsamen Substrat in Dünnschichttechnik auszubilden. Diese Anordnung eignet sich insbesondere für eine preisgünstige Serienherstellung.

Für besondere Anwendungsfälle, insbesondere bei Winkelmessungen, kann das Substrat entsprechend gekrümmt werden.

Weitere Einzelheiten und vorteilhafte Weiterbildung der erfindungsgemäßen Vorrichtung zur berührungslosen Positionsmessung ergeben sich aus weiteren abhängigen Patent ansprüchen in Verbindung mit der folgenden Beschreibung eines Ausführungsbeispiels.

Zeichnung

Figur 1 zeigt eine Sensoranordnung einer Positionsmeßvorrichtung,

Figur 2 zeigt das Ausgangssignal über dem Meßweg von Einzelsensoren der Vorrichtung nach Figur 1 und Figur 3 zeigt einen Verlauf eines systematischen Positionsmeßfehlers zwischen einem i- und i + Iten Sensor.

Beschreibung des Ausführungsbeispieles

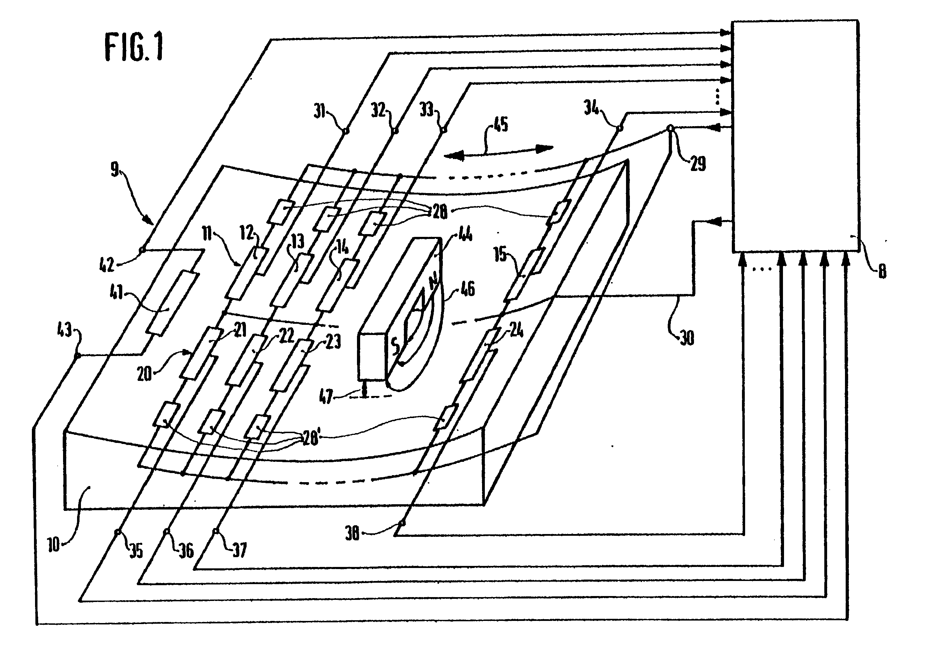

Figur 1 zeigt auf einem Substrat 10 eine erste Sensorreihe 11, von welcher der erste, der zweite, der dritte und der letzte Sensor 12 bis 15 gezeigt sind, und eine zweite Sensorreihe 20, von der ebenfalls der erste, der zweite, der dritte und der letzte Sensor 21 bis 24 gezeigt sind. Alle Sensoren 12 bis 15 und 21 bis 24 liegen mit einem Anschluß über Trimmwiderstände 28, 28E an einer gemeinsamen ersten Stromversorgungsleitung 29 und mit einem anderen Anschluß an einer zweiten Stromversorgungsleitung 30. Die Ausgangssignale der Sensoren 12 bis 15 und 21 bis 24 stehen an den Anschlüssen 31 bis 38 zur Verfügung, die an Mittelanzapfungen der Sensoren führen. Auf dem Substrat 10 befindet sich weiterhin ein Temperatursensor 41, dessen Ausgangssignal an den Anschlüssen 42, 43 zur Verfügung steht. Die beiden Sensorreihen 11, 20 und der Temperatursensor 41 bilden die gesamte Sensoranordnung 9. Die Anschlüsse 29 bis 38, 42 und 43 sind mit einer informationsverarbeitenden Anordnung 8 verbunden.

Ein Positionsindikator 44, der als Permanentmagnet oder Magnetfeldspule ausgeführt ist, ist an einem hier nicht gezeigten Teil befestigt, dessen Position in Meßrichtung 45 bestimmt wird. Der Permanentmagnet 44, dessen Magnetfeld 46 die Sensoranordnung 9 durchdringt, befindet sich in einem Abstand 47 von dem Substrat 10 entfernt.

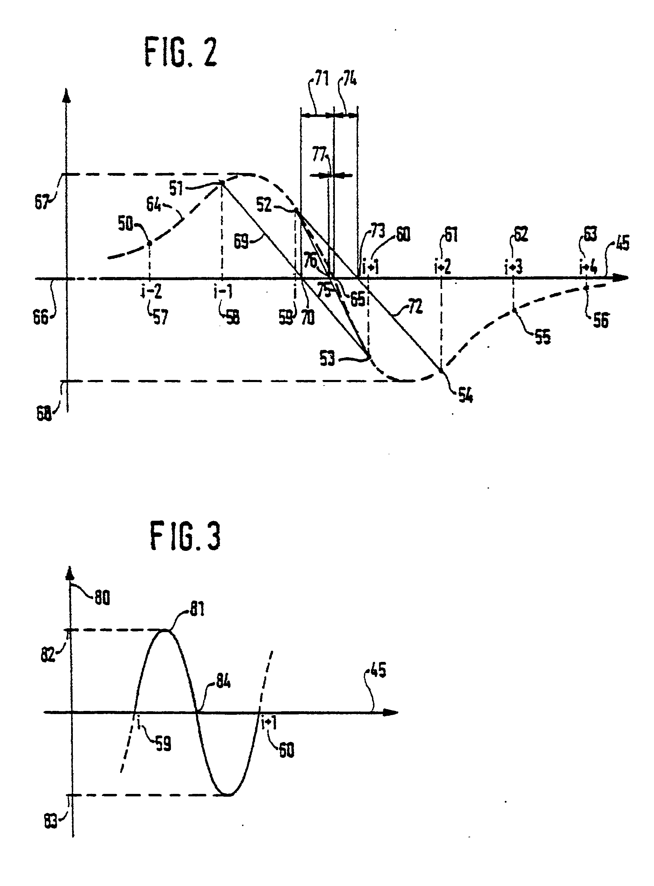

Figur 2 zeigt die Ausgangssignale 50 bis 56 des i-2ten bis i+4ten Sensors 57 bis 63. Die Sensoren i-2 bis i+4, 57 bis 63 sind hierbei aufeinanderfolgende Sensoren entweder der ersten Sensorreihe 11 oder der zweiten Sensorreihe 20. Gestrichelt gezeichnet ist eine theoretische Verbindungslinie 64, auf welcher die Ausgangssignale 50 bis 56 liegen. Die Verbindungslinie 64 hat einen Nulldurchgang 65 auf einem bestimmten Niveau 66, zu welchem sie punktsymmetrisch liegt. Sie weist einen ersten und zweiten Extremwert 67, 68 auf.

Zwischen dem Ausgangssignal 51 des i-1ten Sensors 58 und dem Ausgangssignal 53 des i+1ten Sensors 60 liegt eine erste Gerade 69, die einen ersten Nulldurchgang 70 auf dem bestimmten Niveau 66 hat, welches von dem Nulldurchgang 65 der theoretischen Verbindungslinie 64 einen ersten Abstand 71 aufweist. Zwischen dem Ausgangssignal 52 des i-ten Sensors 59 und dem Ausgangssignal 54 des i+2ten Sensors 61 liegt eine Gerade 72, die einen zweiten Nulldurchgang 73 auf dem bestimmten Niveau 66 hat, welcher von dem Nulldurchgang 65 der theoretischen Verbindungslinie 64 einen zweiten Abstand 74 aufweist. Zwischen dem Ausgangssignal 52 des i-ten Sensors 59 und dem Ausgangssignal 53 des i+1ten Sensors 60 liegt eine dritte Gerade 75, die einen dritten Nulldurchgang 76 auf dem bestimmten Niveau 66 hat, welcher von dem Nulldurchgang 65 der theoretischen Verbindungslinie 64 einen dritten Abstand 77 aufweist.

Figur 3 zeigt in Ordinatenrichtung 80 den Fehler 81 der Positionsbestimmung als Funktion der wahren Position in Meßrichtung 45 zwischen dem i- und i+1ten Sensor 59, 60, der sich als Abweichung der wahren von der als dritten Nulldurchgang 76 errechneten Position ergibt. Der Fehlerverlauf 81 weist ein positives und negatives Maximum 82, 83 sowie einen Nulldurchgang 84 auf.

Auf dem Substrat 10 sind die erste und zweite Sensorreihe 11, 20 angeordnet, die in Dünnschichttechnologie hergestellt sind. Die Anzahl und der Abstand der Sensoren 13 bis 15 und 21 bis 24 hängen von dem gewünschten Längenmeßbereich und der gewünschten Auflösung ab. Es handelt sich beispielsweise um magnetoresistive Elemente, die einen durch das Magnetfeld 46 steuerbaren Widerstand darstellen. Vorteilhaft werden magnetoresistive Elemente mit einer Barberpole-Struktur verwendet, die in der Firmenschrift VALVO, Technische Information 840 323, Seite 3 beschrieben ist. Mit der Barberpole-Struktur wird eine Linearisierung der Sensorkennlinie erreicht, die über einen weiten Bereich ausgedehnt wird, wenn zwei dieser Sensoren gegensinnig geschaltet werden. Der Einfluß des Magnetfeldes 46 hat eine gegenläufige Wirkung auf die Widerstände der beiden Teilsensoren. Die Sensoren 12 bis 15 und 21 bis 24 sind somit in diesem Ausführungsbeispiel aus jeweils zwei Teilsensoren zusammengesetzt, deren Ausgangssignale 31 bis 38 an Mittelanzapfungen abgenommen werden. Wird über die erste und zweite Stromversorgungsleitung 29, 30 in die Sensoren 12 bis 15 und 21 bis 24 ein (Konstant-) Strom eingeprägt, dann steigt die Spannung am Signalanschluß 31 bis 38 eines einzelnen Sensors 12 bis 15 und 21 bis 24 beim Vorbeibewegen des Magneten 44 zunächst auf einen Extremwert an, fällt dann auf einen entgegengesetzten Extremwert weitgehend linear ab und geht anschließend wieder auf die Ruhespannung zurück.

Mit der Sensoranordnung 9 können sowohl Längen- als auch Winkelmessungen durchgeführt werden. Die einfachste Ausführung ist gegeben durch eine in Meßrichtung 45 ausgedehnte Ebene zur Längenmessung. Eine erste Möglichkeit zur Winkelmessung besteht durch eine Krümmung der Sensoranordnung 9 in Meßrichtung 45, wie sie in Figur 1 gezeigt ist. Zweckmäßigerweise ist die Krümmung als Kreisbogen ausgeführt. Eine zweite Möglichkeit zur Winkelmessung ist dann gegeben, wenn die (ebene) Sensoranordnung 9 senkrecht zur Meßrichtung 45 gekrümmt wird. Die Herstellung eines (ebenen) Kreisringes ermöglicht die Erfassung des vollen 360 Grad-Winkels.

Betrachtet man (Figur 2) die Ausgangssignale 50 bis 56 von aufeinanderfolgenden Sensoren i-2 bis i+4, 57 bis 63, die entweder in der ersten oder in der zweiten Sensorreihe 11, 20, enthalten sind, lassen sich die Werte in der theoretischen Verbindungslinie 64 untereinander verbinden. Diese Linie entspricht der in Abszissenrichtung gespiegelten Kennlinie eines einzelnen Sensors. Durch Bestimmen der Punkt-Symmetriestelle bzw. des Nulldurchganges 65 auf einem bestimmten Niveau 66, wird die Position des Mag neten 44 über den Sensoren ermittelt. Das bestimmte Niveau 66 ist die Nullinie, welche die Ausgangssignale 50 bis 56 der Sensoren 57 bis 63 verbindet, wenn kein Magnetfeld vorhanden ist. In der Auswerteschaltung 8 entspricht das bestimmte Niveau 66 einer zur Signalauswertung geeigneten Referenzspannung.

In der Praxis zeigen alle Sensoren durch Fertigungstoleranzen einen unterschiedlichen "Offset".

Ein Offsetabgleich kann beispielsweise durch Zuschalten von Trimmwiderständen 28, 28E in die Anschlußleitungen 31 bis 34, 35 bis 38 der Sensoren 12 bis 15, 21 bis 24 erfolgen. Diese Widerstände sind als magnetfeldunabhängige Serienwiderstände ebenfalls in Dünnschichttechnologie auf dem gemeinsamen Substrat 10 mit gleichem Temperaturkoeffizienten wie derjenige der Sensorelemente hergestellt. Es ist jedoch auch möglich, die Offsetwerte in der Auswerteeinheit in einem Festwertspeicher zu hinterlegen und eine softwaremäßige Offsetkorrektur durchzuführen. Weiterhin zeigen magnetoresistive Elemente ein nichtlineares Verhalten. Mit ebenfalls abgespeicherten Korrekturwerten zur Signalentzerrung wird die theoretische Verbindungslinie 64 erzielt, deren erster und zweiter Extremwert 67, 68 gleich groß sind und die deshalb zum Nulldurchgang 65 bezüglich der Referenzspannung 66 punktsymmetrisch ist.

Eine Positionsbestimmung des Permanentmagneten 44, der an dem Ort des Nulldurchganges 65 der theoretischen Verbindungslinie 64 ist, läßt sich näherungsweise durch eine lineare Interpolation zwischen dem Ausgangssignal 52 des i-ten Sensors 59 und dem Ausgangssignal 53 des i+1ten Sensors 60 als dritter Nulldurchgang 76 der daraus resultierenden Geraden 75 auf der Nullinie 66 bestimmen. Wegen der nichtlinearen Kennlinien der magnetoresistiven Sensoren ist ein solches Geradenverfahren immer mit einem Fehler behaftet, es sei denn, der Magnet 44 steht exakt über einem Sensor oder in der Mitte zwischen zwei Sensoren. Zwischen diesen beiden Fällen entsteht ein in Figur 3 gezeigter systematischer Fehlerverlauf 81, der periodisch mit dem Abstand der Einzelsensoren verläuft. In Ordinatenrichtung 80 ist die Abweichung 77 der als dritten Nulldurchgang 76 errechneten Position von der wahren Position 65 in Meßrichtung 45 angegeben. Der Nulldurchgang 84, der dem Korrekturwert Null entspricht, gibt die Position des Magneten 44 in der Mitte zwischen dem i- und dem i+1ten Sensor an. Die beiden Extremwerte 82, 83 hängen von dem gegenseitigen Abstand der Sensoren 11 bis 15 und 21 bis 24 in Meßrichtung 45, von dem Abstand 47 des Magneten 44 von der Sensoranordnung 9 und von der Temperatur ab.

In einem Verfahren zur Positionsbestimmung wird von dem beschriebenen einfachen Geraden-Verfahren ausgegangen und der darin enthaltene Fehler 80 nach Figur 3 berücksichtigt. Zunächst wird der Nulldurchgang 76 ermittelt und anschließend wird ein Korrekturwert addiert. Der Fehlerverlauf 80 läßt sich gut durch ein kubisches Polynom beschreiben. Die Polynomkoeffizienten sind Funktionen des Sensorabstandes zwischen den einzelnen Sensoren in Meßrichtung 45, des Abstandes 47 des Magneten 44 von der Sensoranordnung 9 und der Temperatur. Bei diesen gegebenen Daten wird während des Meßvorgangs der Korrekturwert mit dem kubischen Polynom jedesmal neu berechnet, wobei als Variable des Polynoms der zuvor mit dem einfachen geraden Verfahren errechnete Nulldurchgangs-Näherungspositionswert 76 verwendet wird. Vorteilhafter ist es jedoch, den Fehlerverlauf 80 über eine Tabelle zu korrigieren, welche in einem Speicher in der Auswerteeinheit 8 hinterlegt ist und während des Meßvorganges von dort ausgelesen wird. Diese gespeicherten Datensätze müssen dann in Kalibriervorgängen mit unterschiedlichen Abständen des Magneten 44 und unterschiedlichen Temperaturen aufgenommen, berechnet und abgespeichert werden. Ist der Abstand 47 des Magneten 44 beim Meßvorgang gegeben, so wird unmittelbar auf den abgespeicherten Datensatz zurückgegriffen, der für den betreffenden Abstand 47 angelegt ist.

Von dem Abstand 47 des Magneten 44 und der Temperatur unabhängiger Wert des Nulldurchgangs und damit der näherungsweisen Position des Magneten 44 wird mit einem anderen Verfahren erreicht: Die lineare Interpolation zwischen dem Ausgangssignal 51 des i-1ten Sensors 58 und dem Ausgangssignal 53 des i+1ten Sensors 60 ergibt einen ersten Nulldurchgang 70 als Schnittpunkt der Geraden 69 mit der Referenzlinie 66. Die lineare Interpolation zwischen dem Ausgangssignal 52 des i-ten Sensors 59 und dem Ausgangssignal 59 des i+2ten Sensors 61 ergibt einen zweiten Nulldurchgang 73 als Schnittpunkt der Geraden 72 mit der Referenzlinie 66. Der annähernd exakte Ort des Magneten 44 liegt im arithmetischen Mittel zwischen dem ersten und zweiten Nulldurchgang 70, 73. Hiermit ist eine hochgenaue Positionsbestimmung erreicht, die bislang, wie bereits im ersten Verfahren, nur mit den Signalen entweder der ersten oder der zweiten Sensorreihe 11, 20 erfolgt.

Die beiden Verfahren zur Positionsbestimmung des Magneten 44 aus den Ausgangssignalen 51 bis 54 des i-1ten bis i+2ten Sensors 58 bis 61 liefern jedoch ein falsches Ergebnis, wenn zusätzlich zu dem Magnetfeld 46 des Permanentmagneten 44 ein Stör-Magnetfeld hinzukommt. Ein Stör-Magnetfeld mit einer Magnetfeldkomponente in Meßrichtung 45 führt zu einer Anhebung bzw. Absenkung der gesamten theoretischen Verbindungslinie 64. Der dann ermittelte Nulldurchgang 65 auf der Nullinie 66 ergibt dann nicht mehr die Position des Permanentmagneten 44. Eine Kompensation dieses Fehlereinflusses wird durch die Anordnung der zweiten Sensorreihe 20 neben der ersten Sensorreihe 11 erreicht. Die beiden Sensorreihen 11, 20 sind derart verschaltet, daß eine Stör-Magnetfeldkomponente in Meßrichtung 45, beispielsweise in der einen Sensorreihe eine allgemeine Anhebung des Signalpegels, in der anderen Sensorreihe dagegen eine allgemeine Absenkung des Signalpegels hervorruft oder umgekehrt. Die Feldlinien 46 des quer zur Meßrichtung 45 liegenden Magneten 44 durchsetzen die Sensoren 12 bis 15 der ersten Sensorreihe 11 mit einer Magnetkomponente beispielsweise in Meßrichtung 45, während die Sensoren 21 bis 24 der zweiten Meßreihe 20 mit einer Feldkomponente entgegen der Meßrichtung 45 durchsetzt werden. Der Mittelwert aus der Positionsbestimmung aus den Signalen der ersten Sensorreihe 11 einerseits und den Signalen der zweiten Sensorreihe 20 andererseits ergibt die Position des Magneten 44 unabhängig von einem Stör-Magnetfeld sehr genau. Die beiden, für jede Sensorreihe getrennt durchgeführte Positionsbestimmungen, deren Mittelwert das sehr genaue Ergebnis darstellt, können sowohl nach dem einen als auch dem anderen Verfahren erfolgen. Die beiden Sensorreihen 11, 20 können in Meßrichtung 45 zur Erhöhung des Auflösungsvermögens gegeneinander versetzt angeordnet sein.

Solange die Ausgangssignale 50 bis 56 auswertbar sind, hängen diese Signale außer von dem Abstand 47 des Magneten 44 auch von der Temperatur ab, wenn der Sensorabstand der einzelnen Sensoren 12 bis 15 und 21 bis 24 in Meßrichtung 45 als konstant angenommen wird. Eine Temperaturerfassung der Sensoranordnung 9 gestattet deshalb eine Ermittlung des Abstandes 47. Dazu ist der Temperatursensor 41 auf dem Substrat 10 vorgesehen. Er ist ebenfalls in Dünnschichttechnologie hergestellt und weist etwa die gleichen Abmessungen wie die Einzelsensoren der ersten und zweiten Sensorreihe 11, 20 auf. Der enge thermische Kontakt des Temperatursensors 41 mit den beiden Sensorreihen 11, 20 bewirkt, daß an den Anschlußklemmen 42, 43 ein präzises Temperatursignal zur Verfügung steht. Bei langen, in Meßrichtung 45 ausgedehnten Sensorreihen 11, 20 können auch mehrere Temperatursensoren 41 vorgesehen sein. Die Ab standsmessung erweitert die eindimensionale Messung in Meßrichtung 45 zu einer zweidimensionalen Messung, wobei der Abstand 47 des Positionsindikators 44 von der Sensoranordnung 9 variieren kann.

Zur Abstandsermittlung ist ein Ganzkurvenerfassungsverfahren vorgesehen, bei dem die gesamten Sensorsignale 50 bis 56 jeweils einer Sensorreihe 11, 20 zur Auswertung herangezogen werden. Verharrt der Magnet 44 in seiner Position, vorzugsweise genau in der Mitte der Sensoranordnung 9 in Meßrichtung 45, dann werden in diesem Moment alle Sensorsignale 50 bis 56 erfaßt und Kennwerte, beispielsweise Polynomkoeffizienten, berechnet. Diese Kennwerte werden für jeden relevanten Abstand 47 des Magneten 44 und festgelegte Temperatur ermittelt und als Datensatz abgespeichert. Bei jeder Abstandsmessung werden aktuelle Kennwerte aufgenommen und mit den gespeicherten Kennwerten verglichen, wobei die aktuelle Temperatur ebenfalls mitberücksichtigt wird, und bei Übereinstimmung der Kennwerte der Abstand 47 ausgegeben wird. Handelt es sich um eine in Meßrichtung 45 sehr lange ausgedehnte mit zahlreichen Sensoren bestückte Sensoranordnung 9, dann reicht die Ermittlung von Kennwerten bei der Kalibrierung in einer einzigen Position des Magneten 44 nicht aus, und es müssen mehrere Kennwertsätze für unterschiedliche Magnetpositionen ermittelt und abgespeichert werden.

Mit dem Ganzkurvenerfassungsverfahren, ergibt sich weiterhin eine Erhöhung der Betriebssicherheit. Es ist möglich, fehlerhafte Sensoren zu erkennen, da bei vorliegendem Defekt die aktuell ermittelten Kennwerte stark von den abgespeicherten Werten abweichen. Die Nummer des defekten Sensors kann angezeigt werden. Mit dem Ganzkurvenverfahren ist es auch möglich, Abweichungen von Einzelsensoren durch Alterungsvorgänge zu ermitteln und durch einen Korrekturfaktor zu berücksichtigen.

## Patentansprüche

1. Vorrichtung zur berührungslosen Positionsmessung, bei der an einem Teil, dessen Position bestimmt werden soll, ein feldlinienaussendendes Element (44), insbesondere ein Permanentmagnet, als Positionsindikator vorgesehen ist, dem eine Sensoranordnung (9; 11, 20) zugeordnet ist, deren in Detektionsrichtung mit definiertem Abstand angeordneten Sensorelemente an eine informationsverarbeitende Anordnung (8) Signale abgeben, die von der Position des Positionsindikators abhängen, dadurch gekennzeichnet, daß parallel zu einer ersten Sensorreihe (11) wenigstens eine zweite Sensorreihe (20) angeordnet ist, und daß das Element (44) in bezug auf die Sensorreihen (11, 20) derart angeordnet ist, daß die Feldlinien (46) auf die Ausgangssignale der Sensorelement (12, 13, 14, 15) der ersten Sensorreihe (11) eine entgegengesetzte Wirkung aufweisen im Vergleich zu den Sensorelementen (21, 22, 23, 24) der zweiten Sensorreihe (20).

2. Vorrichtung nach Anspruch 1, dadurch gekennzeichnet, daß die erste und zweite Sensorreihe (11, 20) in Detektionsrichtung (45) versetzt angeordnet sind, und daß gegenüber der Abstandslücke zwischen zwei Sensorelementen (12, 13) einer Sensorreihe (11) ein Sensorelement (21) der anderen Sensorreihe (20) liegt.

3. Vorrichtung nach Anspruch 1 oder 2, dadurch gekennzeichnet, daß die Sensoren (12 bis 15, 21 bis 24) der beiden Sensorreihen (11, 20) aus magnetoresistiven Elementen hergestellt sind.

4. Vorrichtung nach einem der Ansprüche 1 bis 3, dadurch gekennzeichnet, daß die Nord-Südpol-Verbindungslinie des Permanentmagneten (44) quer zur Meßrichtung (45) liegt.

5. Vorrichtung nach einem der Ansprüche 1 bis 4, dadurch gekennzeichnet, daß wenigstens ein Temperatursensor (41) in engem thermischem Kontakt mit den beiden Sensorreihen (11, 20) vorgesehen ist.

6. Vorrichtung nach einem der Ansprüche 1 bis 5, dadurch gekennzeichnet, daß die Sensoranordnung (9, 11, 20, 41) in Dünnschichttechnologie auf einem ebenen Substrat (10) hergestellt ist.

7. Vorrichtung nach einem der Ansprüche 1 bis 5, dadurch gekennzeichnet, daß die Sensoranordnung (9, 11, 20, 41) in Dünnschichttechnologie auf einem in Meßrichtung (45) gekrümmten Substrat (10) hergestellt ist.

8. Vorrichtung nach einem der Ansprüche 1 bis 5, dadurch gekennzeichnet, daß die Sensoranordnung (9, 11, 20, 41) in Dünnschichttechnologie auf einem quer zur Meßrichtung (45) gekrümmten Substrat (10) hergestellt ist.

## Claims

1. Device for contactless position measurement in which, on one part, the position of which is to be determined, a field line-transmitting element (44), in particular a permanent magnet, is provided as position indicator, a sensor arrangement (9; 11, 20) being associated with said position indicator, the sensor elements of said sensor arrangement arranged at a defined distance in the detection direction issuing signals to an information-processing arrangement (8), said signals depending on the position of the position indicator, characterized in that at least a second sensor row (20) is arranged parallel to a first sensor row (11), and in that the element (44) is arranged in relation to the sensor rows (11, 20) in such a way that the field lines (46) have an opposite effect on the output signals of the sensor elements (12, 13, 14, 15) of the first sensor row (11) in comparison to the sensor elements (21, 22, 23, 24) of the second sensor row (20).

2. Device according to Claim 1, characterized in that the first and second sensor row (11, 20) are arranged offset in the detection direction (45), and in that, opposite the spacing gap between two sensor elements (12, 13) of a sensor row (11), a sensor element (21) of the other sensor row (20) is situated.

3. Device according to Claim 1 or 2, characterized in that the sensors (12 to 15, 21 to 24) of the two sensor rows (11, 20) are manufactured from magneto-resistive elements.

4. Device according to one of Claims 1 to 3, characterized in that the north-south pole connecting line of the permanent magnet (44) lies transverse to the measuring direction (45).

5. Device according to one of Claims 1 to 4, characterized in that at least one temperature sensor (41) is provided in close thermal contact with the two sensor rows (11, 20).

6. Device according to one of Claims 1 to 5, characterized in that the sensor arrangement (9, 11, 20, 41) is manufactured in thin-film technology on a plane substrate (10).

7. Device according to one of Claims 1 to 5, characterized in that the sensor arrangement (9, 11, 20, 41) is manufactured in thin-film technology on a substrate (10) which is curwed in the measuring direction (45).

8. Device according to one of Claims 1 to 5, characterized in that the sensor arrangement (9, 11, 20, 41) is manufactured in thin-film technology on a substrate (10) which is curved transversely to the measuring direction (45).

**Revendications**

1. Dispositif pour mesurer la position sans contact, selon lequel sur une pièce dont la position doit être déterminée, il est prévu un élément (44) émettant des lignes de champ, notamment un aimant permanent, comme indicateur de position, auquel est associé un dispositif de détecteurs (9; 11, 20) dont les éléments détecteurs, disposés avec un écartement défini dans la direction de la détection, fournissent à un dispositif (8) de traitement d'informations des signaux, qui dépendent de la position de l'indicateur de position, dispositif de mesure de position caractérisé en ce que, parallèlement à une première rangée (11) de détecteurs est disposée au moins une seconde rangée (20) de détecteurs, et en ce que l'élément (44) est disposé de telle manière, par rapport aux rangées (11, 20) de détecteurs, que les lignes de champ (46) présentent, sur les signaux de sortie des éléments détecteurs (12, 13, 14, 15) de la première rangée (11) de détecteurs, une action opposée par comparaison avec cette exercée sur les éléments détecteurs (21, 22, 23, 24) de la seconde rangée (20) de détecteurs.

2. Dispositif selon la revendication 1, caractérisé en ce que la première et la seconde rangée (11, 20) de détecteurs sont disposées décalées dans la direction (45) de la détection, et en ce que, vis-à-vis des tronçons d'écartement entre deux éléments détecteurs (12, 13) d'une rangée (11) de détecteurs est situé un élément détecteur (21) de l'autre rangée (20) de détecteurs.

3. Dispositif selon la revendication 1 ou 2, caractérisé en ce que les détecteurs (12 à 15, 21 à 24) des deux rangées (11, 20) de détecteurs sont réalisées à partir d'éléments magnétorésistifs.

4. Dispositif selon l'une des revendications 1 à 3, caractérisé en ce que la ligne de liaison pôle nord – pôle sud de l'aimant permanent (44) se situe transversalement par rapport à la direction (45) de la mesure.

5. Dispositif selon l'une des revendications 1 à 4, caractérisé en ce qu'il est prévu au moins un détecteur de température (41) en étroit contact thermique avec les deux rangées (11, 20) de détecteurs.

6. Dispositif selon l'une des revendications 1 à 5, caractérisé en ce que le dispositif de détecteurs (9, 11, 20, 41) est réalisé selon la technologie par couche mince sur un substrat (10) plan.

7. Dispositif selon l'une des revendications 1 à 5, caractérisé en ce que le dispositif de détecteurs (9, 11, 20, 41) est réalisé selon la technologie par couche mince sur un substrat (10) courbé dans la direction (45) de la mesure.

8. Dispositif selon l'une des revendications 1 à 5, caractérisé en ce que le dispositif de détecteurs (9, 11, 20, 41) est réalisé selon la technologie par couche mince sur un substrat (10) courbé transversalement par rapport à la direction (45) de la mesure.

FIG.1

EP 0 240 707 B1

# FIG. 2

# FIG.3